# EUROPEAN PATENT SPECIFICATION

(11) **EP 2 744 579 B1**
(45) Date of publication and mention of the grant of the patent: **12.10.2016**
(21) Application number: 12823650.2
(22) Date of filing: 16.08.2012
(51) Int. Cl.: A63H 33/04

(54) **CONNECTED MULTI FUNCTIONAL SYSTEM AND METHOD OF USE**
ANGESCHLOSSENES MULTIFUNKTIONELLES SYSTEM UND VERWENDUNGSVERFAHREN
SYSTÈME MULTIFONCTIONNEL CONNECTÉ ET SON PROCÉDÉ D'UTILISATION

(30) Priority: 16.08.2011 US 201161523853 P; 12.07.2012 US 201261670678 P
(43) Date of publication of application: 25.06.2014
(73) Proprietor: Seebo Interactive Ltd., 67778 Tel -Aviv (IL)
(72) Inventor: AKAVIA, Lior, 64957 Tel Aviv (IL); AKAVIA, Liran, 64585 Tel Aviv (IL)
(74) Representative: Hocking, Adrian Niall
(86) International application number: PCT/IL2012/000302
(87) International publication number: WO 2013/024470

(56) References cited:
- EP-A2- 1 776 990
- WO-A1-2010/150232
- KR-A- 20010 103 857
- US-A1- 2002 164 923
- US-A1- 2002 196 250
- US-A1- 2004 127 140
- US-A1- 2004 127 140
- US-A1- 2004 229 698
- US-A1- 2011 021 109
- US-A1- 2011 021 109
- US-B1- 6 290 565

## Description

### FIELD OF THE INVENTION

The present invention is directed to connected multifunctional systems in general and to a dynamic connected multifunctional system adapted to provide a user a learning experience, entertaining experience, and a social experience, in particular.

### BACKGROUND

Toys, games, playing systems, learning and tutorial systems and tools and other similar entertainment and educational systems are well known for providing entertainment opportunities as well as valuable learning to children and adults.

In the new era when smart devices become integral part of our life, it seems that the possibilities of bringing fun and excitement as well as education and learning through games and toys are limitless and the options to challenge children's imaginations and to encourage creativity and social interactivity are infinite.

Although enormous number of games and toys as well as learning systems and tools are available in the market, most of them offer only a primitive engaging play/learning experience, particularly for older children, and thus, there is a need for more exciting and entertaining games and toys that will increase learning and entertainment opportunities for children and adults and stimulate creativity and imagination.

Social networking services, such as Facebook, Twitter, Google, MySpace and Orkut, are changing our communication habits by introducing new tools that simplify and increase on-line interaction between remote users that satisfy a basic need of human beings for socialization, a need that in recent years has raised due to technological developments and intensification of a human with a computers that in many cases causes a loneliness feeling.

Consequently, not only that computerized social networks between individual has become a popular trend, but also, forming of groups in a computer-based (e.g., on-line) gaming environment, based on social relationships between players also became a popular habit. Individuals as well as group interaction between remote users provides a mechanism for social and cooperative game play experience.

The dramatic technological development in communication aid devices and sensors enables the playing as well as the learning experiences to be having several new characteristics. Some of them are:
1. Content can be updated and not just stored in advance in a learning system and/or toys.
2. Content and playing experience can be shared by several players.
3. Sensors can identify in real time player's commands and change learning system's/toy's attributes accordingly.
4. Toy as well as learning systems can be personalized.

The object of the present invention is to provide a connected multi functional system with such new capabilities. The connected multifunctional system of the present invention is aimed to entertain the entire family, children and adults, to educate the children and adults, to provide all users a platform for creativity and social activity, and further to serve as an interface to a Central Artificial Intelligence, all in an affordable price.

The following Patents and published patent applications are believed to represent the current state of the art:
U.S. Pat. No. 6,773,322; U.S. Pat. No. 6,959,166; U.S. Pat. No. 6,160,986; U.S. Pat. No. 6,022,273; U.S. Pat. No. 5,752,2880, U.S. Pat. No. 6,206,745; U.S. Pat. No. 7810037; U.S. Pat. App. No. 201110213785; U.S. Pat. App. No. 2007/0173324; 25 U.S. Pat. App. No. US 2006/0273907. In US 2002/0196250, a system and method of rendering a virtual model employing construction elements capable of identifying themselves that are assembled together to form a physical model is disclosed.

### SUMMARY OF THE INVENTION

The invention provides a dynamic connected multifunctional system according to claim 1.

There is provided, not in accordance with the invention, a connected multi functional system adapted to provide a user at least one of a learning experience, and entertaining experience, and combinations thereof, said system comprising: a multi elements base comprising at least a base structure and a plurality of detachable elements, a communication manager, and an external supporting system comprising at least a smart device, wherein an action performed by the user on the multi element base via a specific detachable element creates a signal containing at least information related to identification of the specific detachable element involved in the action and the relative position over the multi elements base that the action was performed, the signal is delivered via the communication manager to the external supporting system and activates at least one response to be perform by the external supporting system.

There is further provided, not in accordance with the invention, a dynamic connected multifunctional system adapted to provide a user a social experience, the system comprising: a multi elements base comprising at least a base structure and at least one sensor, a communication manager, and an external supporting subsystem comprising at least a smart device and a server, wherein an action performed by the user on the multi element base creates a signal delivered via said communication manager to the smart device and further delivered to the server to thereby allow processing of the signal by dedicated software on the server for creating a social experience to the user.

It is the aim of the present invention to provide a dynamic connected multifunctional system adapted to provide a user at least one of a learning experience, an entertaining experience, a social experience, and combinations thereof, the system comprising: a multi elements base comprising at least a base structure, at least one sensor, a plurality of detachable elements, a communication manager, and an external supporting subsystem comprising at least a smart device and a server, wherein an action performed by the user on said multi element base via a specific detachable element or a sensor, or both, creates at least one signal containing at least information related to identification of the specific detachable element involved in the action and the relative position over the multi elements base that the action was performed, and at least one signal indicating the sensor in use, the at least one signal being delivered via the communication manager to the external supporting system and activates at least one response to be performed by the external supporting system, and characterized in that the signal or a consequent signal is further delivered to the server to thereby allow processing of the signal by a dedicated software on the server to identify the action performed by said user from user specific data stored in a database and the response to be performed, the response being adapted by the server based on historic user specific data and/or group specific data stored in the database to provide either one of the learning experience, the entertainment experience, the social experience, and combinations thereof, personalized to said user, the server adapted to store the processed signals and the adapted response as part of the user specific data and/or group specific data in the database.

The present invention may further comprise a central artificial intelligence adapted to collect and analyze data related to personal preferences and behavior of large amount of users while using a connected multifunctional system comprising learning and entertaining abilities to further implement according to statistical analysis of a group of users with common characteristics on a specific user preferences that comply with the predetermined characteristics defining said group of users.

There is also provided, not in accordance with the invention, a connected multi functional system adapted to provide a user at least one of a learning experience, and entertaining experience, and combinations thereof, the system comprising: a multi elements base comprising at least a base structure and either one of at least one sensor and a plurality of detachable elements, or both, a communication manager, and a smart device with a touch screen, wherein an action performed by the user on said multi element base via a specific sensor or a detachable element, or both, creates a signal containing at least information related to identification of the specific sensor or the detachable element involved in the action and the relative position over the multi elements base that the action was performed, the signal is delivered via said communication manager to the smart device and activates at least one response to be perform by the smart device that is either displayed on the touch screen or involves a production of sounds via said smart device, and wherein said user further controls said multi elements base via the touch screen of the smart device.

### BRIEF DESCRIPTION OF THE DRAWINGS

Examples illustrative of embodiments of the disclosure are described below with reference to figures attached hereto. In the figures, identical structures, elements or parts that appear in more than one figure are generally labeled with the same numeral in all the figures in which they appear. Dimensions of components and features shown in the figures are generally chosen for convenience and clarity of presentation and are not necessarily shown to scale. Many of the figures presented are in the form of schematic illustrations and, as such, certain elements may be drawn greatly simplified or not-to-scale, for illustrative clarity. The figures are not intended to be production drawings.

The figures (Figs.) are listed below.
Figure 1 is a schematic block diagram illustration of a connected multi functional system in accordance with variations of the present invention.
Figure 2 is a schematic illustration of one particular example of a connected multifunctional system implemented in a toy bear system in accordance with variations of the present invention.
Figure 3 is a schematic block diagram illustration of one variation of major components and connection links between the play structure, the connection manager, 10 and the smart device illustrated with reference to figure 1. in accordance with variations of the present invention.

### DESCRIPTION OF VARIATIONS OF THE INVENTION

In the following description, various aspects of connected learning and playing system will be described. For the purpose of explanation, specific configurations and details are set forth in order to provide a thorough understanding of the invention.

A connected multifunctional system adapted to provide a user at least one of a learning experience, and entertaining experience and combinations thereof, not in accordance with the invention, is provided. The system comprising: a multi elements base comprising at least a base structure and a plurality of detachable elements, a communication manager, and an external supporting system comprising at least a smart device, wherein an action performed by said user on said multi element base via a specific detachable element creates a signal containing at least information related to identification of the specific detachable element involved in the action and the relative position over said multi elements base that the action was performed. Said signal is delivered via said communication manager to said external supporting system and activates at least one response to be perform by said external supporting system.

Upon attaching a detachable element to said base structure at least one signal is produced, said signal produced is specific to the particular detachable element being attached to said base structure and differ from a signal that is produced by another detachable elements and further comprises information as to the relative positioning of said detachable element on said base structure.

In accordance with the invention the base structure further comprises at least one of a sensor, and may also comprise an input element, and wherein a signal obtained by activating said sensor and/or input element is delivered via said communication manager to said external supporting system and activates at least one response to be performed by said external supporting system.

The smart device comprises a dedicated software application adapted to allow recognition of said multi element base and signals obtained through it and activate at least one response in said smart device.

In accordance with one further variation of the invention the multi elements base further comprises at least one output element and at least one structural changing element, and wherein activation of said at least one output element and said at least one structural changing element is executed upon delivery of at least one signal to either one of them or to both from said external supporting system.

In accordance with the system presented herein, the output element may produce a sound, an image, a light, and a vibration, and said structural changing element may alter the shape or form of said multi elements base and portions thereof, and may provide said multi elements base and parts thereof a movement and navigation capabilities.

The produced response may be selected from the group consisting of: producing an image on the smart device screen, producing a sound via the smart device audio elements; processing information and storing it on the smart device memory; processing information and delivering the processed data to said server either for storage or for further analysis via a dedicated application installed on said server.

In accordance with the invention the external supporting system further comprises a server. The server functionally allows gathering information for creating a central artificial intelligence that serves as a general external system analysis tool.

The external supporting system allows said multifunctional connected system to be dynamic and to constantly update learning content and entertaining content. In accordance with the present invention the base structure is either a two dimensional board or a three dimensional board or a structure and it may be selected from the group consisting of: alphabetic characters board, numbers board, color learning board, musical notes board, playing board, monopoly play board, snakes and ladders play board, chess board, a jungle, a savanna, a field, an island, a battlefield, a garden, a beach, a river with one or two sides, a kitchen, a working tool desk, a doll house, a farm, a castle, a pirate ship, a car racing track, a car racing stadium, an airport, a swimming pool, a zoo, a doll, a knight, an imaginary creature, an animal doll, a human body, a robot, a musical instruments board, an adventures board, a world globe, puzzles and riddles, a board for construction toys, board for cubes, cardboard games, a train, an airplane, a spaceship, a village, a mountain, a lake, a general propose board.

In accordance with further variation of the invention, the multi element base further comprises at least one output element and wherein said response to said signal produced to said user's action is performed by said at least one output element and activated by signals obtained from said smart device or from said server via said communication manager.

A variation of the dynamic connected multifunctional system, not in accordance with the invention, is adapted to provide a user a social experience, said system comprising: a multi elements base comprising at least a base structure and at least one sensor, a communication manager, and an external supporting subsystem comprising at least a smart device and a server, wherein an action performed by said user on said multi element base creates a signal delivered via said communication manager to said smart device and further delivered to said server to thereby allow processing of said signal by dedicated software on said server for creating a social experience to said user.

The social experience is consisted of at least one of the following: sharing content created by said user with other users, sharing learning experience and playing experience of the user obtained by utilizing said multi element base and said smart device, either synchronized or non-synchronized, with at least one other user, learning from preferences and behavior of said user to create a central artificial intelligence and to further implement according to statistical analysis on said user preferences of other users and vice versa; ranking scores of shared games; ranking liking of shared content.

In accordance with the invention a dynamic connected multifunctional system adapted to provide a user at least one of a learning experience, an entertaining experience, a social experience, and combinations thereof, said system comprising: a multi elements base comprising at least a base structure, at least one sensor, and a plurality of detachable elements, a communication manager, and an external supporting subsystem comprising at least a smart device and a server, wherein an action performed by said user on said multi element base via a specific detachable element or a sensor, or both, creates at least one signal containing at least information related to identification of the specific detachable element involved in the action and the relative position over said multi elements base that the action was performed, and at least one signal indicating the sensor in use, said signal being delivered via said communication manager to said external supporting system and activate at least one response to be perform by said external supporting system, characterized in that said signal or a consequent signal is further delivered to said server to thereby allow processing of said signals by a dedicated software on said server to identify the action performed by said user from user specific data stored in a database and the response to be performed, the response being adapted by the server based on historic user specific data and/or group specific data stored in the database to provide either one of the learning experience, the entertainment experience, the social experience, and combinations thereof, personalized to said user, the server adapted to store the processed signals and the adapted response as part of the user specific data and/or group specific data in the database.

The signal created upon an action performed by said user on said multi element base via a sensor, or via a specific detachable element is delivered directly to the server through a wireless internet connection.

In accordance with additional variation of the invention a central artificial intelligence adapted to collect and analyze data related to personal preferences and behavior of large amount of user while using a connected multifunctional system comprising learning and entertaining abilities such as the system of the present invention to further implement according to statistical analysis of a group of users with common characteristics on a specific user preferences that comply with the predetermined characteristics defining said group of users.

A variation of the connected multifunctional system, not in accordance with the invention, is adapted to provide a user at least one of a learning experience, and entertaining experience, and combinations thereof, said system comprising: a multi elements base comprising at least a base structure and either one of at least one sensor and a plurality of detachable elements, or both, a communication manager, and a smart device with a touch screen, wherein an action performed by said user on said multi element base via a specific sensor or a detachable element, or both, creates a signal containing at least information related to identification of the specific sensor or the detachable element involved in the action and the relative position over said multi elements base that the action was performed, said signal is delivered via said communication manager to said smart device and activates at least one response to be perform by said smart device that is either displayed on said touch screen or involves a production of sounds via said smart device. and wherein said user further controls said multi elements base via said touch screen of said smart device.

In a variation, the learning experience, and entertaining experience provided to said user are obtained by utilizing said smart device touch screen as a learning and playing tool concomitantly with said multi elements base.

Although various features of the disclosure may be described in the context of a single embodiment, the features may also be provided separately or in any suitable combination. Conversely, although the disclosure may be described herein in the context of separate embodiments for clarity, the disclosure may also be implemented in a single embodiment. Furthermore, it should be understood that the disclosure can be carried out or practiced in various ways, and that the disclosure can be implemented in embodiments other than the exemplary ones described herein below. The descriptions, examples and materials presented in the description, as well as in the claims, should not be construed as limiting, but rather as illustrative.

Terms for indicating relative direction or location, such as "right" and "left", "up" and "down", "top" and "bottom", "back" and "front", "horizontal" and "vertical", "higher" and "lower", and the like, may also be used, without limitation.
Reference is now made to the figures.

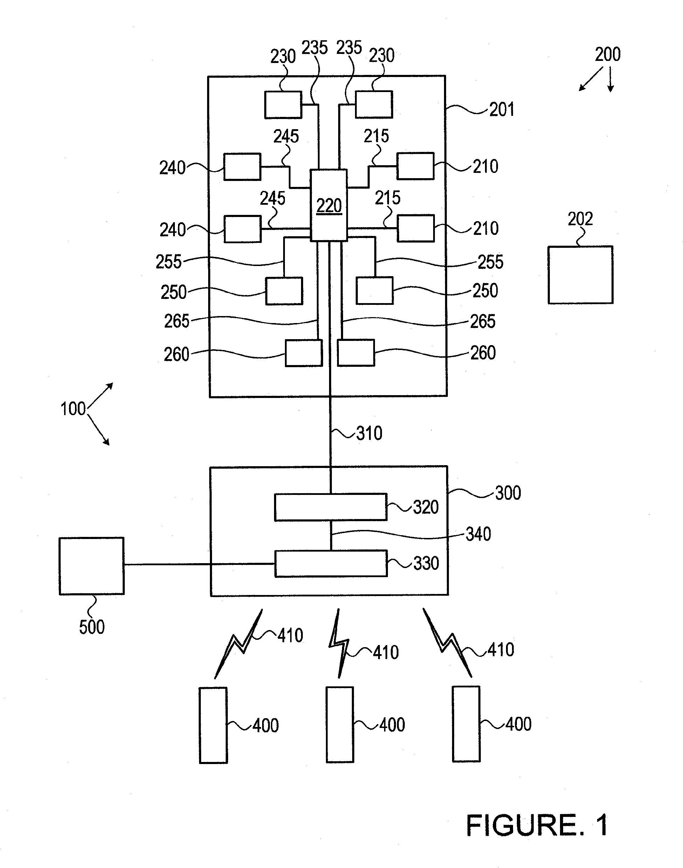

Figure 1 is a schematic block diagram illustration of a connected multifunctional system 100 adapted to provide the user either one of a learning experience, an entertaining experience and a social experience, and combinations thereof. The learning experience as well as the entertaining experience such as playing may also be a social experience allowing the user to use the multifunctional system of the invention either alone or with other users both; users in its proximity and/or remote users, and may also provide the user, a content and preferences adjusted to the specific user accordance to statistical preferences suitable to the specific user. For example, if the user is Spanish five years old boy then the system will prove the user content and setup preferences that are suitable to his, age, gender and geographical location integrated with the specific child recorded preferences.
The system illustrated in this figure is one exemplifying variation of the present invention. However, for simplifying the description and avoiding unnecessary repetitions the explanation below will mainly refer to a multi element toy system with extended explanation and description of usage of the system for learning and for providing a social experience to the user.

In accordance with the invention, connected multi element toy system 100 comprises two subsystems: a multi element base toy 200 (hereinafter: "MEBT"), and an external supporting subsystem 300.

In accordance with the invention, MEBT 200 comprises two components: a play structure 201 and a plurality of detachable toy elements 202 (hereinafter: "DTE").

Play structure 201 may be configured as a plane two dimensional shape structure such as a monopoly play board, snakes and ladders play board, chess board, color learning board, shapes learning board, numbers learning board and the like. Alternatively play structure 201 may be configured as a three dimensional landscape structure such as, but not limited to a jungle, a savanna, a field, an island, a battlefield, a garden, a beach, a river with one or two sides, and the like. Alternatively play structure 201 may be configured as a three dimensional structure such as but not limited to a kitchen, a working tool desk, a doll house, a farm, a castle, a pirate ship, a car racing track, a car racing stadium, an airport, a swimming pool, a zoo, a globe, a shape puzzle, a number puzzle, and others of the same type. Alternatively play structure 201 may be configured in a three dimensional shape such as a doll, a knight, an imaginary creature like monster, an imaginary creature from outer space, an animal including without limitation prehistoric animals such as dinosaurs, marine animals such as fish, dolphin, shark, octopus, turtle, snake, and other marine animals, wild animals such as lion, tiger, elephant, giraffe, dingo and other wild animals, domesticated animals and pets like horse, cow, sheep, goat, pig, dog. cat, and the like, robots, musical instruments such as a guitar, a violin, a trumpet, a piano and other musical instruments, and any other figured character.

DTEs 202 are configured according to the opportunities that play structure 201allows. For example, when play structure 201 is a savanna then DTE 202 may be various animals such as a lion, a zebra, a giraffe, an elephant, and any other typical animal. It may also be human characters such as an animal savior and his team, a researcher and his team, authentic (exotic) tribe members, and various accompanying accessories suitable for each variation. In accordance with the specific example illustrated above, one or more of the elements may further be a field-vehicle such as a jeep, a tent, and in fact, DTE 202 may be any other element that may create a story in the savanna, and combinations of elements thereof. Similarly, when play structure 201 is a kitchen then DTE 202 may be a plate, a pot, a tea pot, etc. Similarly, when play structure 201 is an "ABC" learning board then DTE 202 may be the letters A to Z. Similarly, when play structure 201 is a mathematics learning board, then DTE 202 may be numbers 0 to 9. Similarly, when play structure 201 is a doll then DTE 202 may be a wearing particles and accessories such as a shirt, a dress, trousers, skirt, a hat, eye glasses, shoes, bags, and the like. In the same manner, each play structure 201 may interact with enormous variations of DTEs 202 designed in various shapes, materials, sizes, and colors.

The interaction of each DTE 202 with play structure 201 in accordance with the present invention may be established by using various technologies, including without limitation by RFID (Radio Frequency Identification) technology, by NFC (Near field communication) technology, by Bluetooth technology, via sensors and sensor detectors such as but not limited to, pressure sensors, touch sensors, odor sensors, temperature sensors, distance sensors, acceleration sensors, humidity sensors, sound sensors, and image sensors, and by utilizing plurality of toy connective recognition elements, as fully described in U.S. Patent Application No. 61657914 in which two of the joint inventors are the inventors of the present application, the disclosures of which is hereby incorporated by reference, or by using a mixture of available technologies. For simplifying the description of the invention the interaction of each DTE 202 with play structure 201 will be demonstrated in details with reference to the toy connective recognition elements mentioned above, however it should be clear that similar implementation may be utilize by using sensors and sensors detectors, or any other technology as mentioned above as well as other communication technologies available in the art mutatis mutandis to the specific communication technology in use.

The toy connective recognition elements described in U.S. Patent Application No. 61657914 are generally based on a TAG element that is functionally attached to DTE 202, and at least one toy environmental recognition component denoted hereinafter: **"hotspot element"** 210. In such variation, a plurality of hotspot elements 210 may be embedded in play structure 201 in predetermined locations and serve for identifying the attachment of a specific DTE 202 in a specific location on play structure 201 at a specific time point.

In accordance with such variation of the invention, each DTE 202 has its unique signature signal that upon generation in a specific hotspot 210 provides the information of the identity and location of the specific DTE 202 attached thereto to play structure 201. For example, a lion being attached in a hotspot near the river of a savanna play structure will generate a different signal than a zebra attached in the same position. Another example, the letter "D" being attached in a hotspot near a picture of a dog will generate a different signal than the letter "X" attached in the same position.

The information from hotspot elements 210 may be carried through wires 215 to a communication manager 220. Alternatively, the information may be delivered to communication manager 220 wirelessly (not shown).

In accordance with one variation of the present invention, each DTE 202 may be cascaded with another element to create a combination of elements - this is rendered possible by including a hotspot circuitry on top of each additional element, allowing the upper element to be mated with the lower one. The final hotspot on MEBT 200 is able to recognize the combination of the accumulated elements.

Communication manager 220 may be designed as an independent, separated unit housed, for example, in a simple packaging that is functionally attached to play structure 201, or it may be designed as a dependent unit embedded in play structure 201.

In accordance with further variation of the invention play structure 201 may comprise a play board and a doll (not shown). In such variation, communication manager 220 may be either attached to the doll or to the board or it may stand alone as a separated unit functionally connected to either one of them or to both. When communication manager 220 is an independent unit play structure 201 may be replaced from time to time to thereby provide the player a variety of game experiences. In the same manner, when communication manager 220 is attached to or embedded in a doll the play board (not shown) may be interchangeable to challenge and satisfy the player's curiosity and imagination.

In accordance with variations of the invention, each hotspot element 210 may functionally be connected to communication manager 220 in a specific known location within the communication manager, therefore, a signal from a specific hotspot element 210 indicates the exact location of the DTE 202 that triggered the signal generation. For example, a signal coming from the attachment of a cow in the grass will be captured by communication manager 220 in a different location than a same signal generated when the cow is attached in the dairy barn. Another example, a signal coming from the attachment of a circle shape on car wheels will be captured by communication manager 220 in a different location than a same signal generated when the circle shape is attached on the car door.

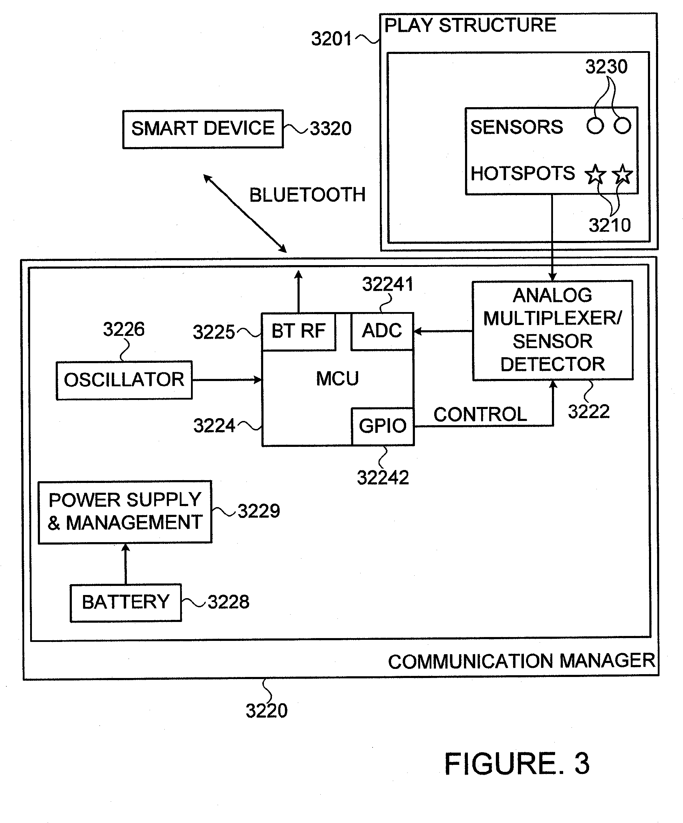

Alternatively, each hotspot element 210 may functionally be connected to communication manager 220 via an analog multiplexer (as illustrated in fig. 3), wherein said analog multiplexer may either be positioned on play structure 201 or on communication manager 220.

Alternatively, information from hotspot elements 210 to communication manager 220 may be transferred wirelessly by any known means. In that configuration, each hotspot element 210 comprises a unique signal for identifying the location of the hotspot in addition to the signal for identifying the specific DTE 202 that was attached to the hotspot element 210.

Additionally, in the specific variation illustrated in figure 1, communication manager 220 further receive supplemental information from sensors 230 through wires 235 or in a wireless manner (not shown). Sensors 230 are preferably embedded in play structure 201 and may be, for example but not limited to, sensors of pressure, 30 touch, odor, temperature, distance, acceleration, Capacitive touch sensors, humidity, sound, image, and other sensors known in the art.

Sensors 230 may be activated by the player's activities (not shown). A player may touch, press, caress, and activate any of the sensors embedded in play structure 201. The user may talk: to MEBT 200 or just approach MEBT 200 and a sound sensor or an image sensor (such as a camera) will capture the signal.

Communication manager 220 may also be connected to input elements 240 either through wires 245 or wirelessly. Input elements 240 may be for example, a camera or a microphone or any other audio and/visual elements capable of capturing sound and/or image of the player and the playing activity and transmit the information to communication manager 220. Communication manager 220 may, for example, but not limited to, capture the voice of the player or its image for identification of its presence; capture voice signal of the player for activity commands, and the like.

Communication manager 220 may further be connected to output elements 250 either through wires 255 or wirelessly. Output elements 250 may be a speaker or a screen for example that may produce a sound or image. Therefore, output elements 250 may receive from communication manager 220 instructions to generate a sound or an image, or both, and act accordingly. One example for such scenario is when communication manager 220 instructs output element 250 of a doll to cry or to laugh, a cow to moo, a pirate to shout, a guitar to play and the like. Another example for such scenario is when communication manager 220 instructs output element 250 to produce an image according to the player's movements. Additionally, output element 250 may also be an odor producing element. In such scenario output element 250 may produce a specific smell according to the situation. In a kitchen game when the players bake a cake then a sweet smell may be produce and when the player prepare an omelet a significant smell of a fried egg is produced and so on. In a doll, when the player makes a shower to the doll, then the doll may say: "now I smell good" and a perfume smell may be produced. It should be clear that in accordance with the present invention MEBT 200 may comprise several different output elements 250 or none.

Communication manager 220 may further be connected to structure changing elements (hereinafter: **"SCE")** 260 either through wires 265 or wirelessly. SCE 260 may cause structural changes in play structure 201, and/or in DTE 202. SCE 260 may cause a doll, animal, robot, monster, and any other optional figured character of play structure 201 to open/close its eyes or its mouth, a dog to wag his tail, a flag in a pirate sheep to flutter and so on. SCE 260 may comprise engines and may further provide play structure 201 movement capabilities. In such variation, play structure 201 may be designed for example as a vehicle (e.g. a car, a bus, a motorcycle, a truck, an airplane, a helicopter, a train, a boat, etc.), as an animal (continental animal, marine animal or flying animal).

It should be clear that for simplifying reasons only a pair of hotspots 210, wires 215, sensors 230, wires 235, input elements 240, wires 245, output elements 250, wires 255, SCE 260 and wires 265 are drawn in figure 1, but the number of all of the above, embedded in a single play structure may be smaller or larger, and the number of each pair is not connected to any other pair, besides its connecting wires.

MEBT 200 is functionally connected to an external supporting subsystem 300. Supporting subsystem 300 comprises at least two elements: A smart device 320 and a server 330. The connection of MEBT 200 to smart device 320 may be established by direct connectivity by cables, for example by wires 310, or it may be established wirelessly by any known wireless technology including without limitation, Standard Bluetooth (BT), Bluetooth 4.0, Infra Red (IR), Radio frequency (RF), Near Field Connection (NFC), Zigbee, I2C, SPI, UART, sound, Ultrasonic sound, and other 2.4 GHz RF protocols, and any other wireless communication technology know in the art.

The connection between MEBT 200 to server 330 may be established via smart device 320 or directly by using for example Wi-Fi, WiMAX, 30, any other internet communication technology know in the art. In such direct connection between MEBT 200 to server 330 smart device 320 may also be remotely connected to MEBT200.

Smart device 320 may be a Smartphone, a tablet, a smart TV (IPTV), a personal computer (PC), a notebook, a Gaming console (mobile and immobile) or any other device with connectivity and computational needed abilities. In accordance with the present invention, a smart device may also be either one of an Apple TV device, Google TV, Boxee-Box, Gaming console, streamer, and a PC, being connected to a TV or computer screen.

In accordance with one option of the invention, smart device 320 may be embedded in play structure 201. For example, when smart device 320 is a Smartphone it may be embedded in play structure 201. In accordance with one another option of the invention, smart device 320 is functionally attached to play structure 201.

In accordance with one further variation of the invention, play structure 201 may be a virtual toy and only software with graphical representation of the toy exists.

When connectivity of MEBT 200 is established through smart device 320, smart device 320 is functioning as the information transferring unit and for that purpose has mainly three functionalities: a. receiving and sending information to and from MEBT 200 through communication manager 220; b. directly interacting with the player or players; c. receiving and sending information to and from server 330.

As part of its first functionality, smart device 320 receives information from communication manager 220. Such information may be, but not limited to, information about the attachment of a specific DTE 202 in a specific hotspot 210, information from sensors 230 on some activity of the player, sound and/or picture information from a player through input element 240, and the like.

As part of the same first functionality, smart device 320 also sends information to communication manager 220. Such information may be, but not limited to, information on sound or image to be activated by output element 250, information to SCE 260 to perform a structural change or to start/cease moving, etc.

As part of the second functionality as directly interacting with the player, smart device 320 may offer the player to select from available games or applications. For example, smart device 320 can display a picture similar to play structure 201 including locations of different DTEs 202 positioned in play structure 201. When the player positions the DTEs 202 in an appropriate position a success indication will he created, and when the player misses the appropriate position then a hint may be 25 created, either a vocal hint such as "MOVE FORWORD" "MOVE TO RIGHT", "MOVE BACK", or a visual hint such as lightening an optional spot.

In accordance with one another example, smart device 320 may display an image of play structure 201 and upon attachment of a specific DTE 202 to play structure 201 an image of the. specific DTE 202 attached thereto is displayed on the smart device screen, and the virtual character displayed on the screen may talk, sing, move, dance, tell a story, and interact with other characters either similar to other DTEs or virtual characters.

Further, as part of its third functionality, smart device 320 is adapted to interact with server 330. Smart device 320 comprises an application that gathers signals and data from MEBT 200 and sends for decoding and processing, preferable over the internet to server 330. The server generally processes the gathered data and detects the physical interaction of the player with the toy, such as head petting, hand shake, lift, tilt, etc., and in response, server 330 sends relevant commands to the application preferably via the internet. These commands are converted, for example, to voice reactions in speakers that may be part of smart device 320 or be embedded in MEBT 200, and/or to a visual reaction on the screen of smart device 320.

Smart device 320 may be connected to server 330 by wireless connection or by wires 340. In accordance with variations of the invention, server 330 may be a physical server located in the vicinity of MEBT 200. Alternatively it may be a remote or a virtual server located in cyber space as an internet site or in any other form available. Alternatively, smart device 320 may include server capabilities within and may serve as both functionalities.

In accordance with variations of the invention smart device 320 comprises and run dedicated software that includes at least the following:
i. a driver adapted to communicate with a Central Artificial Intelligence (denoted hereinafter as: CAI), as will be described in details below by using a proprietary protocol that allows transferring data between the tangible toy and the smart device;
ii. a game engine i.e. a software framework which allows rapid development of game content and includes various graphics, toolkits, and a special software interface that allows the game content to receive and send events to the driver;
iii. game content i.e. the main game idea concept behavior and graphics which interacts with the player and responds to actions taken on the MEBT. As the smart device has internet connectivity the game content also has the ability to communicate with the server, thus, enabling at least: to customize game behavior, to increase the game content, to allow multi player experiences, and to allow sharing and viewing the player generated content.

In accordance with variations of the invention, server 330 has various functionalities and some of them are listed below:
First, it functions as the information processing unit; Second, it functions as the storage medium for all sound, picture, software applications, software games, and else; Third, it may serve as the junction for other satellite toys to participate in the social activities of the system provided herein; Forth it may serve as the vehicle for gathering information for CAI 500 that serves as the system analysis tool; Fifth it has a role in the recognition process and authentication of toys and/or users; Sixth it gathers and stores information about each user and its preferences; Seventh it may have a role in advertisement management that may afterwards run in front of the users screens; Eighth it may gather and store User Generated Content and distribute it later on in a smart manner.

As part of the first functionality of server 330, as the information processing unit, server 330 may receive data from smart device 320 or directly from communication manager 220 in MEBT 200. Data is retrieved from either one of sensors 230, hotspots 210 and input elements 240, or from some of them. Server 330 manipulates the data and acts accordingly. For example, but not limited to, server 330 may receive sound conmands that were entered by the player to input element 240. Server 330 analyses the sound commands and sends back to MEBT 200 an action instruction. Such action instruction reaches communication manager 220 directly or via smart device 320. The action instruction may be, for example but not limited to, a sound to be generated by output element 250, a structural changing activity, or a movement to be performed by SCE 260.

As another example, server 330 may receive as a data the sound of the player's name and use it when approaching the player after identifying him/her.

As another example, the player may ask a question, the question is delivered as sound to server 330 that by using software that was preinstalled on the server answers the player's question.

As another example, server 330 may identify, using software preinstalled on the server, the player playing at the moment by identifying its voice or its picture and act accordingly. Server 330 may have a database of players already played in MEBT 200 by their voice, picture, playing preferences, scoring in plays, toy's identity and the like, and personalize the gaming experience of each player. Additionally, server 330 may further collect contents generated by users and re-distribute this content.

As part of the second functionality of server 330 as the storage medium for all sound, picture, software applications, software games, users generated content, etc., server 330 is functionally operating as a library, updated continuously by sounds and images to be created by input elements 240, games and applications to be played using smart device 320, and the like.

As part of the third functionality of server 330 as the junction for other satellite toys to participate in the social activities of the system, server 330 is functionally connected to satellite toys 400 preferably via wireless connection 410.

Satellite toys 400 may be similar to MEBT 200 and connect with server 330 in the same manner, or they may differ from MEBT 200 as long as they are capable of connecting with server 330. The interaction between satellite toys 400 and MEBT 200 through server 330 may be for one or more of the following: sharing content created by a player using sounds, pictures, text, paintings and other kind of data with other players; rate content created by other players; compete in games with other players, and the like.

Server 330 may further be connected to CAI 500 that is functionally adapted to serve as a system analysis tool. CAI 500 has two main functionalities: learning about a specific player (the same child) from different toys and adjusts all his toys accordingly; and learning from all toys on statistical behavior of players and act accordingly.

In accordance with additional variation of the invention, smart device 320 and server 330 may further be connected to stand alone Apps that may be compatible with system 100. In such scenario, the specific player will be recognized by server 330 (authentication) and adaptation to its preferences according to data that previously was collected may occur to thereby enhance the player's gaming experience.

In the following, specific examples of interaction between the player and the different components of system 100 as well as specific implementation of various feature of the connected interactive system provided herein and the creation of a novel central artificial intelligence platform will be describes to better demonstrate the major capabilities and characteristic of the system provided herein. Also, in the following examples specific excerpt of proprietary coding protocols will be provided. For simplicity of the description in the following the system and parts thereof will be generally denoted as: "toy". Also, the terms "player", "user" and "child" may be used in the following interchangeably.

### Example 1 - Voice

*Speech to text (voice recognition) -* The toy reacts to the player's instructions;
*Text to speech -* The toy answers the player without relying on preloaded recorded voice;
*Recording and embedding of voice -* The toy asks for the player's name, the player answers and the toy uses that name from now on with its own voice;
*Voice identification* - The toy identifies the player's voice.

### Example 2 - Vision

*Face identification* - The toy identifies the player's face;
*Video recording and sharing -* Parents are at work x it using a method such as pattern recognition.

### Example 3 -Mechanics

*Wheels*/*Legs* - The toy is mobile and can move around independently;
*Empathy spurring organs -* The toy has a human look that establishes emotional connection with the child. This concept could be referred as "biological MMI" (Man Machine Interface) or "emotional MMI", and will make leverage of human emotions in order to achieve greater attention, dedication and other goals;
*Arms -* The toy can build a small tower from cubes or move a pawn on a chess board.

### Example 4 - sensors

*Touch sensors -* The toy can identify the player's touch;
*Distance sensors -* The toy can identify an obstacle;
*Accelerometer*/*Gyroscope* - The toy can identify how it was moved by the player;
*RFID -* Toy can identify RFID tags on other elements;
*Camera -* Toy can process image/video;
*Direct conductor interface -* Toys can identify other elements based on direct conductors interface.

### Example 5 - Navigation and Orientation

*Movement capabilities -The* toy can move around the house independently.

### Example 6 - Personality

The toy has moods and emotions.

### Example 7 - Inter-personal interactions

*Social capabilities* -A Boy-toy independently decides to ask a Girl-toy to a dance while they meet each other in the kitchen.

*Social connection between a toy to a remote toy.*

*Social connection between a child to a remote child, through their toys.*

*Multiple social connections, which form a "group" of children and toys that share a related playing experience.*

### Example 8 - Multi-element

The toy can recognize that a new nose was connected to it and says "Wow, now I can smell better!"

The color learning board can recognize that the yellow and blue elements are connected and say: "Blue and Yellow make Careen!"

### Example 9 - Cross platform

Personal artificial intelligence (PAI) can be installed on various type of smart devices, such as iOS devices, Android devices, Windows devices, Linux devices and others

### Example 10 - PAI learning

*Natural learning* - The toy can adjust to the player: to his skills, abilities, knowledge and personal taste. This can be achieved by at least four models of natural learning:
1. Habituation - new elements in the environment will get bigger attention than old elements. For example: the toy reacts to a new shirt that was purchased for him differently than to an already known element. Another example: the toy will be more calm when it's in the hands of someone known (the child), rather than in the hands of a stranger.
2. Operant conditioning - The toy will constantly change its own reactions to the environment, by measuring the child's reactions to its behavior. For example: the child will discover that when he pets the toy, the toy enjoys it and closes its eyes. If the child liked this reaction, he will probably pet it more often. The toy will respond by enhancing its reaction to the petting. This method allows the toy to change its moods and basic traits according to the reinforcements it receives from the child.
3. Classical conditioning - two events that often occur together, can be used for a new type of learning. For example: The child usually listens to the toy's story before bed time, and then gives the toy a kiss. After several times the toy identifies the pattern, and reacts to it. For example, by saying before bed time: "now a story and a kiss!"
4. Play - the toy can learn new things from playing with the child. For example, after a game of learning new words, the toy also learns some new words. *Guided learning -* The child records a new voice that should be played when the toy is lifted. In general, while in learning mode, the user can evoke events and record new sounds right afterwards. Sounds will be twisted and then be used by the toy, when same events are evoked.

*Advanced users learning -* A parent from Poland teaches the toy to speak Polish - although the toy was released to the market without this language. Any advanced user can change the toy's behavior.

### Example I1- CAI learning and PAI personalization

*Specific user -* The CAI learns about the same player from different toys, and adjusts all his toys accordingly.

*All users -* The CAI learns from all toys and makes usage of what it learnt in order to optimize the personalization of each PAI for each player. This learning process will happen both automatically and manually by the CAI's operators.

### Example 12 - CAI scalability

CAI supports millions of PAIs simultaneously.

### Example 13 - Authentication

*Toy-PAI authentication -* PAI knows which toy is connected and when.

*Toy-CA1 authentication -* CAI knows which toy is connected and when and makes sure that only original toys are supported.

*Toy-Communication manager authentication -* the communication manager identifies which toy it is connected to.

### Example 14 - Player analysis

CAI can determine capabilities and characteristics of the player.

### Example 15 - User rating and collaboration interface

Interface which allows users to explicitly rate content created by other users, share the content created by them and download content created by others.

### Example 16 - Interface to application developers

Main technological parts will be packaged as a platform. Third party developers will receive API and/or SDK add-ons.

### Example 17 - Alter-ego

Online remote person can speak through phone/internet while the toy plays the sounds along with synced animation. A person's face can also be animated into the toy based on standard pictures. Offline recording could be used as well.

### Example 18 - Pop-up Toy

The toy may also appear and react on a close screen (Smartphone/Tablet/TV/Etc.) when the child calls the toy by its name.

### Example 19 No-Host-made

Toys have a very basic behavior also when not connected to any smart device. For example the toy seems to be sleeping.

### Example 20 - Excerpt from Communication manager C code based on Arduino board: scanning hardware hotspots, debouncing, transmitting to iPhone based on audiojack connector via proprietary FSK protocol

```
  #include <stdio.h>
  const int sensorPin = A0;
  const int muxSelectPin0 = 2;
  const int muxSelectPin1 = 3;
  const int muxSelectPin2 = 4;
  const int muxSelectPin3 = 5;
  const int transmitPin = 7; //12
  const int ledPin = 13;
  #define NUM_OF_ELEMENTS 8
  #define ELEMENT1_VALUE 90//lion 1k
  #define ELEMENT2_VALUE 195//zebra 3k
  #define ELEMENT3_VALUE 512//tiger 10k
  #define ELEMENT4_VALUE 445//giraffe 7.6k
  #define ELEMENT5_VALUE 343//elephant //5k
  #define NOELEMENT_VALUE 1023
  #define TOLERANCE_PERCENTAGE 10.0
  void selectMuxInput(int index)
  {
     digitalWrite(muxSelectPin3, LOW);
     switch (index)
     {
        case 0:
           digital.Write(muxSelectPin0, LOW);
           digitalWrite(muxSelectPin1, LOW);
           digitalWrite(muxSelectPin2, LOW);
          break;
        case 1:
          digitalWrite(muxSelectPin0, HIGH);
          digitalWrite(muxSelectPin1, LOW);
           digitalWrite(muxSelectPin2, LOW);
          break;
        case 7:
          digitalWrite(muxSelectPin0, HIGH);
          digitalWrite(muxSelectPin1, HIGH);
          digitalWrite(muxSelectPin2, HIGH);
          break;
     }
  }
  byte detectElementNumber(int ADCvalue)
  {
     if (isAround(ADCvalue, (int)ELEMENT1_VALUE))
        return 1;
     if (isAround(ADCvalue, (int)ELEMENT2_VALUE))
        return 2;
     if (isAround(ADCvalue, (int)ELEMENT3_VALUE))
        return 3;
     if (isAround(ADCvalue, (int)ELEMENT4_VALUE))
        return 4;
     if (isAround(ADCvalue, (int)ELEMENT5_VALUE))
        return 5;
  if (ADCvalue>=1000) // nothing
        return 0;
  }
  void loop() {
     char hotspot, byte4send;
     int i;
     for (i=0; i<(int)NUM_OF_ELEMENTS; i++)
     {
           selectMuxInput(i);
           sensorValue = analogRead(sensorPin);
           hotspot = 'A';
           hotspot += i;
           byte elementDetected =
  detectElementNumber(sensorValue);
         if (lastDetected[i] != elementDetected)
          {
               delay(100);
               elementDetected =
  detectElementNumber(analogRead(sensorPin));
               if (lastDetected[i] != elementDetected) {
                     delay(100);
                     elementDetected =
  detectElementNumber(analogRead(sensorPin));
                     if (lastDetected[i] != elementDetected) {
                           if (elementDetected>0)
                             sprintf(serialStr, "hotspot %c has
  element %d",hotspot,elementDetected);
                          else if (elementDetected == 0)
                             sprintf(serialStr, "hotspot %c is
  empty",hotspot);
                          else if (elementDetected<0)
                             sprintf(serialStr, "hotspot %c ---
  invalid detected: %d",hotspot, sensorValue);
                          Serial.println(serialStr);
                               if (elementDetected>=0)
                           {
                             lastDetected[i] = elementDetected;
                             transmitHotspotState();
                            ledState = !(ledState);
                           digitalWrite(ledPin, ledState);
                   }
             }
        }
        }
    }
 }
```

### Example 21 - Excerpt from iPhone driver Objective-C code: decodes proprietary audio FSK protocol from microphone input and converts it to numerical data regarding tag/hotspot info, sends to application

```
 #import "remoteIO.h"
 #import "globals.h"
            switch( stateMachineSelector )
            {
                 case 1:
                       if(q[i]>maxSignal)
                       {
                             sampelsCounter++;
                             break; //from case
                       }
                       else if (q[i]<minSignal)
                             stateMachineSelector=2;
                 case 2:
                       if(q[i]>maxSignal)
                       {
                             frequencyM(sampelsCounter);
                             stateMachineSelector=1;
                             sampelsCounter=0;
                             break;
                       }
                       else if(q[i]<minSignal)
                       sampelsCounter++;
                       break;
 }
 void frequencyM(int samplesPerPeriod)
 {
      const int Min2k=1400;
      const int Max2k=2800;
      const int Min8k=6700;
      float f;
      float time;
      static float fArray[4] ;
      static int f2k=0;
      static int f8k=0;
      time=(float)samplesPerPeriod/44;
      f=(1/time)*1000;
 if ( !(f>3600 && f<4800) )
        {
      for(int j=0: j<4; j++)
      fArray[j]=fArray[j+1];
      fArray[3]=f;
        }
      else if( (f>3600 && f<4800) )
      {
            for(int j=0; j<4; j++)
                 fArray[j]=0;
      }
       for (int i=0;i<4;i++)
      {
       if(fArray[i]>Min8k)
            f8k++;
             else if (fArray[i]>=Min2k && fArray[i]<=Max2k}
            f2k++;
        }
   if(f2k==4)
    {
         f=2000;
         for(int j=0; j<4; j++)
               fArray[j]=0;
    }
   else if {f8k==4 )
   {
         f=8000;
         for(int j=0; j<4; j++)
               fArray[j]=0;
   }
   else
       f=0;
      f2k=f8k=0;
      if(f==2000 | | f==8000)
         getHexa(f);
      }
 - (void) showDigital: (int *) word
 {
      static int stateOfMords=WAIT_FOR_FIRST_F;
      static int numOfFrames =NUM_HOTSPOTS;
      int decimal= [refToSelf binaryToDecimal:word];
      switch (stateOfWords)
      {
            case WAIT_FOR_FIRST_F:
                              if(decimal==15)
                       stateOfWords=WAIT_FOR_SECOND_F ;
                 break;
           case WAIT_FOR_SECOND_F :
                              if(decimal==15)
                       stateOfWords=WAIT_FOR_INIT_ZERO ;
                  else
                       stateOfWords==WAIT_FOR_FIRST_F;
             break;
            case WAIT_FOR_INIT_ZERO:
                  if(decimal==0)
                       stateOfWords=ADD_DATA_BYTE;
                  else if(decimal==15)
                       stateOfWords=WAIT_FOR_SECOND_F ;
                  else
                       stateOfWords=MAIT_FOR_FIRST_F;
                 break;
            case ADD_DATA_BYTE:
                  if(decimal==15)
                  {
                       stateOfWords=WAIT_FOR_SECOND_F ;
                       numOfFrames=NUM_HOTSPOTS;
                       _countSpots=0;
                  }
                  else
                  {
                        [refToSelf insertWord:decimal];
                       numOfFrames=numOfFrames-1;
                       if(numOfFrames==0)
                        {
                             numOfFrames=NUM_HOTSPOTS;
                             stateOfWords=WAIT_FOR_FIRST_F;
                        }
                  }
                 break;
 }
 -(void)StartListeningWithFrequency//:(float)frequency
 {
       OSStatus status;
      _countSpots = 0;
      AudioComponentDescription desc;
      desc.componentType = kAudioUnitType_Output;
      desc.componentSubType = kAudioUnitSubType_RemoteIO;
      desc.componentFlags = 0;
      desc.componentFlagsMask = 0;
      desc.componentManufacturer =
 kAudioUnitManufacturer_Apple;
         AudioComponent inputComponent =
 AudioComponentFindNext(NULL, &desc);
      status = AudioComponentInstanceNew( inputComponent,
 &audioUnit);
         UInt32 flag = 1;
      status = AudioUnitSetProperty(audioUnit,
 kAudioOutputUnitProperty_EnableIO,
 kAudioUnitScope_Input,kInputBus, &flag, sizeof(flag));
       AudioStreamBasicDescription audioFormat;
      audioFormat.mSampleRate =
 44100.00;//44100.00;
      audioFormat.mFormatID =
 kAudioFormatLinearPCM;
      audioFormat.mFormatFlags =
 kAudioFormatFlagIsSignedInteger
 kAudioFormatFlagIsPacked;
      audioFormat.mFramesPerPacket = 1;
      audioFormat.mChannelsPerFrame = 1;
      audioFormat.mBitsPerChannel = 16;
      audioFormat.mBytesPerPacket = 2;
      audioFormat.mBytesPerFrame = 2;
      status = AudioUnitSetProperty(audioUnit,
 kAudioUnitProperty_StreamFormat,
  kAudioUnitScope_Output,
  kInputBus,
  &audioFormat,
  sizeof(audioFormat));
 AURenderCallbackStruct callbackStruct;
      callbackStruct.inputProc = recordingCallback;
     callbackStruct.inputProcRefCon = self;
      status = AudioUnitSetProperty(audioUnit,
 kAudio0utputUnitProperty_SetInputCallback,
  kAudioUnitScope_Global,
   kInputBus,
 &callbackStruct,
 sizeof(callbackStruct));
 float bufferLength = 0.005;
 AudioSessionSetProperty(kAudioSessionProperty_PreferredHa
 rdwareIOBufferDuration,
 sizeof(bufferLength), &bufferLength);
      status = AudioOutputUnitStart(audioUnit);
 }
```

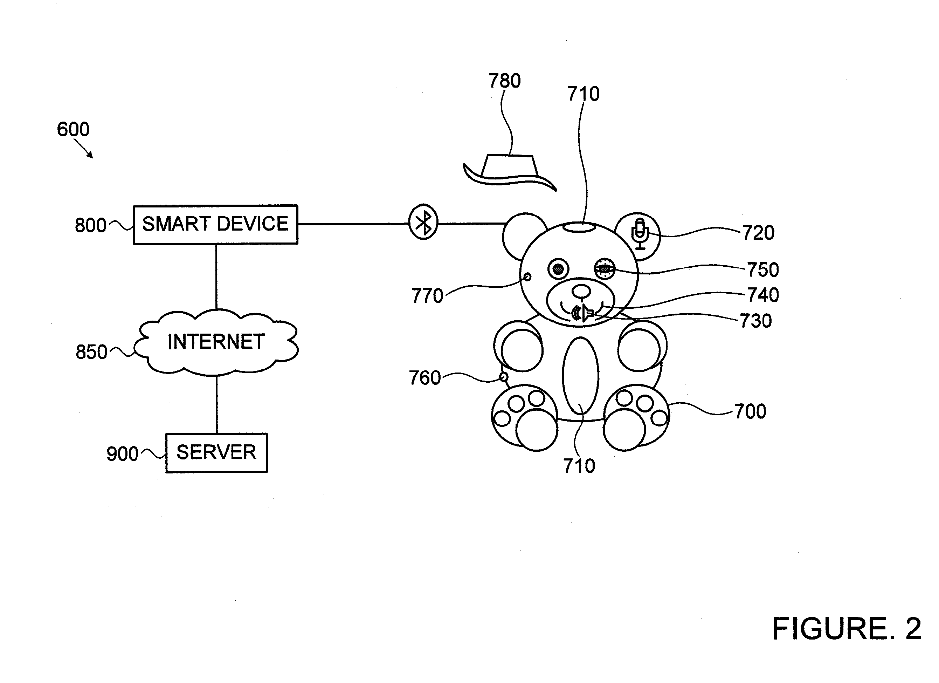

Reference is now made to Figure 2 that is an example of a connected interactive multi element toy system in accordance with variations of the present invention.

A multi elements toy bear system 600 comprises a toy bear 700, a detachable element 780, a smart device 800, and a server 900.

Toy bear 700 has four types of elements: it has sensors such as touch sensors 710 that can identify caressing activity of the player/child in the belly and/or on the head of the toy bear 700. It has input elements like microphone 720 located in toy bear 700 ear and can simulate the feeling of hearing by toy bear 700. It has output elements like speaker 730 located in toy bear 700 mouth simulating talking by toy bear 700. It has structural changing elements like mechanical lips 740 and mechanical eyes 750 that upon command either one of them can be opened and closed. In addition, it may have movement capabilities so as to allow the bear for example, to walk, to jump, to set, to lie and stand afterwards, to turn to other directions, etc. Further, for regular operation it may have an operation button 760 and indication LED 770 assuring the operation of the device.

All elements embedded in toy bear 700 are connected to communication manager (not shown) that is connected wirelessly to smart device 800, for example by Bluetooth technology. In such example, bear 700 may further comprise activation button for the Bluetooth.

All the elements embedded in toy bear 700 can create by dedicated software algorithms installed either in smart device 800 or in server 900, or in both, a gaming experience of a "live" animal.

For example, toy bear 700 may talk to the player when he/she touches it for the first time and greet it with "hello"; it may record the player voice for identification; it may identify the player by identifying its voice and call him/her by the name when talking; toy bear 700 may make sounds when touched in touch sensor 710 areas like giggling, or growling softly; it may change the sound according to the pattern of touch; it may close its eyes when the player pets him via the structural changing elements; it may read a story or sing a song or teach math through speaker (stories, songs and math problems can be downloaded from server 900 that may update its database library on a regular basis; bear 700 may also teach the player to sing a song by giving him a line of song (through speaker 730) and check if line is correct (through microphone 720) by using a dedicated software in smart device 800 or in server 900. Similarly, bear 700 may also teach the player to solve a math problem by giving him a math riddle (through speaker 730) and check if answer is correct (through microphone 720) by using a dedicated software in smart device 800 or in server 900. It should be clear that the above examples are only an un-limiting pinch of activities and functionalities of system 600 and many other optional functionalities and operating ability of multi elements toy bear system 600 as described in details with reference to figure 1 are practicable and within the scope of the present invention.

Reference is now made to **Figure 3** that is a schematic block diagram illustration of one variation of major components and connection links between play structure 3201 comprising sensors 3230 and hotspots 3210, communication manager 3220, and smart device 3320. In accordance with the example illustrated in figure 3 communication manager mainly comprises: an analog multiplexer/sensor detector 3222, a micro control unit (MCU) 3224 (that comprises at least an ADC 32241(AC to DC convertor), and a GPIO port 32242 (general purpose input/output pin), and may further comprise a Bluetooth connector 3225), an oscillator 3226, and a battery 3228 and a power supply and management unit 3229 that are functionally adapted to provide communication manager operation power.

Upon connection of a DTE with a tag similar to DTE 202 illustrated in details with reference to figure 1, to a hotspot 3210 (similar to hotspot 210 illustrated in figure 1) embedded in the play structure 3201, a circuit with a predefined resistance (defined by the tag value) is closed. As the MCU 3224 instructs the analog multiplexer 3222 to scan all possible inputs continuously, when a change in resistance is detected (via voltage comparison on the ADC port 32241) the MCU 3224 reports to smart device 3320 via Bluetooth transmission, on which port a change occurred (position) and to which new value (tag value detection). Consequently, smart device 3320 recognizes the specific DTE attached to the play structure and the specific location that it was attached to. GPIO port 32242 is further connected to analog multiplexer 3222 and controls which entrance will be active at each specific moment.

It should be clear that that the combination illustrated in figure 3 is only an example and in accordance with variations of the invention, the system may or may not contain an analog multiplexer. In addition, while existing, the analog multiplexer may be positioned on play structure or as a component of the communication manager.

In accordance with one specific variation of the invention (not shown), system 100 may comprise a MEBT designed as a doll, preferably but not necessarily a plush doll, and a smart device such as smart phone or a tablet is preferably embedded in the doll. The doll may be designed in many different shapes, sizes, and resemble various types of creatures. The doll functionally comprises touch sensors embedded for example in the doll's legs, arms, head and stomach and optionally in other organs and areas of the doll. The sensors in addition to their major fonctionalities, further allow the PAI to be aware of locations and relations between all objects. The smart device is functionally connected to a server, preferably but not necessarily on a cloud technology. The smart device may comprise among other things, a face animation that virtually complete the flash doll face, and as such the doll is virtually able to open and close the eyes, to open and close the mouth, to blink, to giggle, to cry, to sing a song, to tell a story, and to perform many other functionalities, as illustrated above. In accordance with this specific application, the doll may also react to the smart device sensors and add-on applications. The personality of a specific doll and related applications can be updated by CAI and the doll usage is constantly monitored. In accordance with the specific variation provided herein, the doll may implement an asynchronous digital communication protocol, which may also include an error detection mechanism, based on FSK (Frequency Shift Key) modulation. The same line (cord) can also transmit the regular microphone input since different frequencies are used. Other communication protocols including without limitation: Standard Bluetooth, Bluetooth 4.0, NFC, Infra-red, I2C, SPI, UART, Ultrasonic sound and other 2.4 GHz RF protocols, may also be used between the doll's integrated circuit (IC) and the smart device.

Optionally, an image/video analysis can replace some of the sensors. More specifically, a camera of the smart phone or the tablet may be used instead of a sensor. Alternatively, a built-in screen may be implemented in the doll. In such scenario, the smart device may not be embedded in the doll. In such model and when there's more than one smart device, the player can control the doll via the smart device.

Additionally or alternatively, a mechanical face and other mechanical organs such as mechanical legs and arms may be implemented in the doll. Alternatively, the doll may have movement capabilities via wheels. In such scenario, some of the sensors allow orientation and navigation, e.g. distance sensor and accelerometer. The doll can navigate autonomously, based on algorithms implemented on the PAI. In such variation complex relations between the player and the "playing system" are possible. One example is having a game where the player holds a "gun" and the target is the navigating doll. After a successful "shot", the doll reacts accordingly.

The player (child) can create "scenes" based on teaching the doll new behaviors. The child can also "play" scenes created by other children, and related videos can be presented on adjacent screens such as Smartphone/tablet/IPTV.

The Smart device may further be connected to several buzzers, wherein each buzzer is being used by a different player to thereby allow multi-player games such as trivia.

It should be clear that in the variation illustrated above other kinds of toys instead of a doll may also be used, e.g. a car, a boat, an airplane, a basket for basketball game, a football goal, and other toys that are not based on a doll.

In accordance with specific variation of the invention, a basket can recognize shots and differentiate between successful shots to unsuccessful shots. This may be practiced by utilizing a movement sensor that is adapted to identify vibrations on the basket in order to identify that the basket was hit by the ball. Inside the ring of the basket, a beam and another sensor may be positioned. When the sensor stops recognizing the beam, it means that the shot was successful. In such variation, the PAI may track scores, provide statistics, and manage competitions between the players.

It should be clear that the description of the embodiments and attached figures set above in this specification serves only for a better understanding of the invention, without limiting its scope. It should also be clear that a person skilled in the art, after reading the present specification could make adjustments or amendments to the attached figures and above described embodiments that would still be covered by the present invention.

The scope of the invention is defined by the appended claims. 34

## Claims

1. A dynamic connected multifunctional system adapted to provide a user at least one of a learning experience, an entertaining experience, a social experience, and combinations thereof, said system comprising:
a multi elements base (200; 600) comprising at least a base structure (201; 700; 3201), at least one sensor (230; 3230), a plurality of detachable elements (202; 780), a communication manager (220), and
an external supporting subsystem (300) comprising at least a smart device (320; 3230; 800) and a server (330; 900),
wherein an action performed by said user on said multi element base (200; 600) via a specific detachable element (202; 780) or a sensor (230; 3230), or both,
creates at least one signal containing at least information related to identification of the specific detachable element (202; 780) involved in the action and the relative position over said multi elements base (200; 600) that the action was performed, and
at least one signal indicating the sensor (230; 3230) in use, said signals being delivered via said communication manager (220) to said external supporting system (300) and activate at least one response to be performed by said external supporting system (300), **characterized in that**
said signals or consequent signals are further delivered to said server (330; 900) to thereby allow processing of said signals by a dedicated software on said server (330; 900) to identify the action performed by said user from user specific data stored in a database and the response to be performed,
the response being adapted by the server (330; 900) based on historic user specific data and/or group specific data stored in the database to provide either one of the learning experience, the entertainment experience, the social experience, and combinations thereof, personalized to said user,
the server (330; 900) adapted to store the processed signals and the adapted response as part of the user specific data and/or group specific data in the database.

2. A dynamic connected multifunctional system according to claim 1, wherein said multi elements base (200; 600) further comprises at least one of an output element (250; 730) configured and operable to produce a sound, an image, a light, and a vibration, and at least one structural changing element (260; 740; 750) configured and operable to alter the shape or form of said multi elements base (200; 600), and/or to provide movement and navigation capabilities to said multi elements base (200; 600) and parts thereof, and wherein activation of said at least one output element (250; 730) and/or said at least one structural changing element (260; 740; 750) is executed upon delivery of at least one signal from the smart device (320; 3230; 800) of said external supporting system (300) to the communication manager (220).

3. A dynamic connected multifunctional system according to claim 1 or claim 2, wherein the user specific data of the user database includes at least one of: voice, picture, playing preferences, scoring in plays, identity of the multi elements base, and contents generated by the user.

4. A dynamic connected multifunctional system according to any one of claims 1 to 3, wherein said sever (330; 900) allows said system to be dynamic and to constantly update learning content and entertaining content, and further allows gathering information for creating a central artificial intelligence (500) that serves as a general external system analysis tool.

5. A dynamic connected multifunctional system according to any preceding claim, further comprising a central artificial intelligence (500) adapted to collect and analyze data in the group specific data related to personal preferences and behavior of large amount of users while using the connected multifunctional system (100) comprising learning and entertaining abilities to further implement according to statistical analysis of a group of users with common characteristics on a specific user preference that comply with the predetermined characteristics defining said group of users.

6. A connected multifunctional system (100) according to any preceding claim, wherein said smart device (320; 3230; 800) comprises a touch screen, and said learning experience, and entertaining experience provided to said user are obtained by utilizing said smart device (320; 3230; 800) touch screen as a learning and playing tool concomitantly with said multi elements base (200; 600).

7. A connected multifunctional system (100) according to any preceding claim, further comprising at least one input element (240; 720) connected to the communication manager (220) for capturing and transmitting the action performed by said user to the communication manager (220).

8. A connected multifunctional system (100) according to any preceding claim, further comprising a satellite toy (400) connected to the server (330; 900) for interacting with the multi elements base (200; 600) by one or more of the following: sharing content such as sounds, pictures, text, painting or other data created by the user with another user, rating content created by the other user, competing in games with the other user.

9. A connected multifunctional system (100) according to claim 8, wherein the satellite toy (400) is a further multi elements base.

10. A connected multifunctional system (100) according to any one of claims 5 to 7 when dependent on claim 8 or claim 9, wherein the central artificial intelligence (500) is adapted to collect and analyze data related to personal preferences and behavior of the same user from the multi elements base (200; 600) and the satellite toy (400) to implement personalization across the multi element bases (200; 600) and the satellite toy (400).

## Patentansprüche

1. Dynamisches, verbundenes, Multifunktionssystem, das angepasst ist, um einem Benutzer wenigstens eins bereitzustellen von einem Lernerlebnis, einem Unterhaltungserlebnis, einem sozialen Erlebnis und Kombinationen davon, das System umfassend:
eine Multielementbasis (200; 600), umfassend wenigstens eine Basisstruktur (201; 700; 3201), wenigstens einen Sensor (230; 3230), eine Mehrzahl von trennbaren Elementen (202; 780), einen Kommunikationsmanager (220) und
ein externes unterstützendes Untersystem (300), umfassend wenigstens ein intelligentes Gerät (320; 3230; 800) und einen Server (330; 900),
wobei eine Handlung, die durch den Benutzer über ein spezifisches trennbares Element (202; 780) oder einen Sensor (230; 3230) oder beide auf der Multielementbasis (200; 600) durchgeführt wird, wenigstens ein Signal, das wenigstens Informationen hinsichtlich der Identifikation des spezifischen trennbaren Elements (202; 780), das an der Handlung beteiligt ist, und die relative Position über der Multielementbasis (200; 600), dass die Handlung durchgeführt wurde, enthält, und wenigstens ein Signal, das den Sensor (230; 3230), der verwendet wird, angibt, erzeugt, wobei die Signale über den Kommunikationsmanager (220) an das externe unterstützende System (300) geleitet werden und
wenigstens eine Reaktion aktivieren, die durch das externe unterstützende System (300) ausgeführt wird; **dadurch gekennzeichnet, dass**
die Signale oder nachfolgende Signale ferner an den Server (330; 900) geleitet werden, um dadurch die Verarbeitung der Signale durch eine zweckbestimmte Software auf dem Server (330; 900) zu ermöglichen, um die durch den Benutzer durchgeführte Handlung aus benutzerspezifizierten Daten, die in einer Datenbank gespeichert sind, zu identifizieren und die Reaktion auszuführen,
die Reaktion durch den Server (330; 900) basierend auf benutzerspezifischen und/oder gruppenspezifischen Vergangenheitsdaten, die in der Datenbank gespeichert sind, angepasst wird, um eins von dem Lernerlebnis, dem Unterhaltungserlebnis, dem sozialen Erlebnis und Kombinationen davon personalisiert für den Benutzer, bereitzustellen,
der Server (330; 900) angepasst ist, um die verarbeiteten Signale und die angepasste Reaktion als Teil der benutzerspezifischen und/oder gruppenspezifischen Daten in der Datenbank zu speichern.

2. Dynamisches verbundenes Multifunktionssystem nach Anspruch 1, wobei die Multielementbasis (200; 600) ferner wenigstens eins von einem Ausgabeelement (250; 730), das konfiguriert ist und betrieben werden kann, um ein Geräusch, ein Bild, ein Licht und eine Vibration zu erzeugen, und wenigstens ein Strukturänderungselement (260; 740; 750), das konfiguriert ist und betrieben werden kann, um die Gestalt oder Form der Multielementbasis (200; 600) zu ändern und/oder Bewegung und Navigationsfähigkeiten an die Multielementbasis (200; 600) und Teile davon bereitzustellen, umfasst und wobei die Aktivierung des wenigstens einen Ausgabeelements (250; 730) und/oder des wenigstens einen Strukturänderungselements (260; 740; 750) bei Eingehen wenigstens eines Signals vom intelligenten Gerät (320; 3230; 800) des externen unterstützenden Systems (300) an den Kommunikationsmanager (220) ausgeführt wird.

3. Dynamisches verbundenes Multifunktionssystem nach Anspruch 1 oder Anspruch 2, wobei die benutzerspezifischen Daten der Benutzerdatenbank wenigstens eins beinhalten von: Stimme, Bild, Spieleinstellungen, Spielergebnissen in Spielen, Identität der Multielementbasis und durch den Benutzer erzeugten Inhalten.

4. Dynamisches, verbundenes Multifunktionssystem nach einem der Ansprüche 1 bis 3, wobei der Server (330; 900) es dem System ermöglicht, dynamisch zu sein und fortlaufend Lerninhalt und Unterhaltungsinhalt zu aktualisieren, und es ferner ermöglicht, dass Informationen zum Erzeugen einer zentralen künstlichen Intelligenz (500), gesammelt werden, die als allgemeines externes Systemanalysewerkzeug dient.

5. Dynamisches, verbundenes Multifunktionssystem nach einem der vorangehenden Ansprüche, ferner umfassend eine zentrale künstliche Intelligenz (500), die angepasst ist, um Daten in den gruppenspezifischen Daten, die sich auf persönliche Einstellungen und das Verhalten von großen Benutzerzahlen beziehen, zu sammeln und zu analysieren, während das verbundene Multifunktionssystem (100), das Lern- und Unterhaltungsfähigkeiten umfasst, verwendet wird, um gemäß der statistischen Analyse einer Gruppe an Benutzern mit gemeinsamen Eigenschaften in einer spezifischen Benutzereinstellung, die mit den vorgegebenen Eigenschaften übereinstimmen, die die Benutzergruppe definieren, zu implementieren.

6. Verbundenes Multifunktionssystem (100) nach einem der vorangehenden Ansprüche, wobei das intelligente Gerät (320; 3230; 800) einen Touchscreen umfasst und das Lernerlebnis und Unterhaltungserlebnis, die an den Benutzer bereitgestellt werden sollen, anhand des Touchscreens des intelligenten Geräts (320; 3230; 800) in Verbindung mit der Multielementbasis (200; 600) als ein Lernund Spielwerkzeug erzeugt werden.

7. Verbundenes Multifunktionssystem (100) nach einem der vorangehenden Ansprüche, ferner umfassend wenigstens ein Eingabeelement (240; 720), das mit dem Kommunikationsmanager (220) verbunden ist, um die durch den Benutzer durchgeführte Handlung aufzuzeichnen und an den Kommunikationsmanager (220) zu übertragen.

8. Verbundenes Multifunktionssystem (100) nach einem der vorangehenden Ansprüche, ferner umfassend ein Satellitenspielzeug (400), das mit dem Server (330; 900) verbunden ist, um mit der Multielementbasis (200; 600) durch eins oder mehrere der folgenden zu interagieren: Teilen von Inhalt, wie Ton, Bilder, Text, Malerei oder andere Daten, die durch den Benutzer erzeugt wurden, mit einem anderen Benutzer, Bewerten von durch den anderen Benutzer erzeugtem Inhalt, Teilnehmen an Spielen mit dem anderen Benutzer.

9. Verbundenes Multifunktionssystem (100) nach Anspruch 8, wobei das Satellitenspielzeug (400) eine weitere Multielementbasis ist.

10. Verbundenes Multifunktionssystem (100) nach einem der Ansprüche 5 bis 7, wenn diese von Anspruch 8 oder Anspruch 9 abhängig sind, wobei die zentrale künstliche Intelligenz (500) angepasst ist, um die Daten hinsichtlich persönlichen Einstellungen und Verhalten desselben Benutzers von der Multielementbasis (200; 600) und dem Satellitenspielzeug (400) zu sammeln und zu analysieren, um Personalisierung über die Multielementbasen (200; 600) und das Satellitenspielzeugt (400) zu implementieren.

## Revendications

1. Système multifonctionnel dynamique connecté conçu pour procurer à un utilisateur soit une expérience d'apprentissage, soit une expérience de divertissement, soit une expérience sociale, au moins, et leurs combinaisons, ledit système comprenant :
une base multiélément (200 ; 600) comprenant au moins une structure de base (201 ; 700 ; 3201), au moins un capteur (230 ; 3230), une pluralité d'éléments détachables (202 ; 780), un gestionnaire de communication (220), et
un sous-système de soutien externe (300) comprenant au moins un dispositif intelligent (320 ; 3230 ; 800) et un serveur (330 ; 900),
où une action effectuée par ledit utilisateur sur ladite base multiélément (200 ; 600) via un élément détachable spécifique (202 ; 780) ou par un capteur (230 ; 3230), ou les deux, crée au moins un signal contenant au moins des informations liées à l'identification de l'élément détachable spécifique (202 ; 780) impliqué dans l'action et la position correspondante sur ladite base multiélément (200 ; 600) que l'action a effectuée, et au moins un signal indiquant le capteur (230 ; 3230) en cours d'utilisation, lesdits signaux étant fournis par ledit gestionnaire de communication (220) vers ledit système externe de soutien (300) et activent au moins une réponse à donner par ledit système externe de soutien (300), **caractérisé en ce que**
lesdits signaux ou signaux consécutifs sont en outre fournis audit serveur (330 ; 900) afin de permettre ainsi le traitement desdits signaux par un logiciel dédié sur ledit serveur (330 ; 900) pour identifier l'action effectuée par ledit utilisateur à partir des données propres à l'utilisateur enregistrées dans une base de données et la réponse à donner,
la réponse étant adaptée par le serveur (330 ; 900) en fonction des données propres à l'utilisateur historique et/ou aux données propres au groupe enregistrées dans la base de données pour donner soit une expérience d'apprentissage, soit une expérience de divertissement, soit une expérience sociale, soit une combinaison de celles-ci, personnalisées pour ledit utilisateur,
le serveur (330 ; 900) adapté pour enregistrer les signaux traités et la réponse adaptée en tant que partie des données propres à l'utilisateur et/ou des données propres au groupe dans la base de données.

2. Système multifonctionnel dynamique connecté selon la revendication 1, dans lequel ladite base multiélément (200 ; 600) comprend en outre au moins soit un élément de sortie (250 ; 730) conçu et opérable pour produire un son, une image, une lumière et une vibration, et au moins un élément de changement de structure (260 ; 740 ; 750) conçu et opérable pour modifier la forme ou la silhouette de ladite base multiélément (200 ; 600), et/ou pour procurer des capacités de mouvement et de navigation pour ladite base multiélément (200 ; 600) et pour des parties de celle-ci, et où l'activation dudit au moins un élément de sortie (250 ; 730) et/ou dudit au moins un élément de changement de structure (260 ; 740 ; 750) est exécutée lors de la production d'au moins un signal à partir du dispositif intelligent (320 ; 3230 ; 800) dudit système externe de soutien (300) vers le gestionnaire de communication (220).

3. Système multifonctionnel dynamique connecté selon la revendication 1 ou la revendication 2, dans lequel les données propres à l'utilisateur de la base de données d'utilisateur comprennent au moins : soit une voix, soit une image, soit des préférences de jeu, soit des scores de jeu, soit l'identité de la base multiélément, soit le contenu produit par l'utilisateur.

4. Système multifonctionnel dynamique connecté selon l'une quelconque des revendications 1 à 3, dans lequel ledit serveur (330 ; 900) permet audit système d'être dynamique et de mettre à jour constamment le contenu d'apprentissage et le contenu de divertissement, et qui permet en outre le regroupement d'informations pour créer une intelligence artificielle centrale (500) qui sert d'outil d'analyse générale de système externe.

5. Système multifonctionnel dynamique connecté selon l'une quelconque des revendications précédentes, comprenant en outre une intelligence artificielle centrale (500) conçue pour recueillir et pour analyser des données dans les données propres au groupe liées aux préférences personnelles et au comportement d'un grand nombre d'utilisateurs pendant l'utilisation du système multifonctionnel connecté (100) comprenant des possibilités d'apprentissage et de divertissement, afin d'implémenter encore selon une analyse statistique d'un groupe d'utilisateurs présentant des caractéristiques communes par rapport à une préférence spécifique d'utilisateur qui répond aux caractéristiques prédéfinies définissant ledit groupe d'utilisateurs.

6. Système multifonctionnel dynamique connecté (100) selon l'une quelconque des revendications précédentes, dans lequel ledit dispositif intelligent (320 ; 3230 ; 800) comprend un écran tactile, et où ladite expérience d'apprentissage et ladite expérience de divertissement procurées audit utilisateur s'obtiennent par utilisation dudit écran tactile de dispositif intelligent (320 ; 3230 ; 800) en tant qu'outil d'apprentissage et de jeu en concomitance avec ladite base multiélément (200 ; 600).

7. Système multifonctionnel dynamique connecté (100) selon l'une quelconque des revendications précédentes, comprenant en outre au moins un élément d'entrée (240 ; 720) relié au gestionnaire de communication (220) pour capturer et pour transmettre l'action effectuée par ledit utilisateur vers le gestionnaire de communication (220).

8. Système multifonctionnel dynamique connecté (100) selon l'une quelconque des revendications précédentes, comprenant en outre un jouet satellite (400) relié au serveur (330 ; 900) pour interagir avec la base multiélément (200 ; 600) par l'une quelconque des choses suivantes : partage de contenu tel que des sons, des images, du texte, une peinture ou d'autres données créées par l'utilisateur avec un autre utilisateur, évaluation du contenu créé par l'autre utilisateur, compétition dans des jeux avec l'autre utilisateur.

9. Système multifonctionnel dynamique connecté (100) selon la revendication 8, dans lequel le jouet satellite (400) est une autre base multiélément.

10. Système multifonctionnel dynamique connecté (100) selon l'une quelconque des revendications 5 à 7, quand il dépend de la revendication 8 ou de la revendication 9, dans lequel l'intelligence artificielle centrale (500) est adaptée pour recueillir et pour analyser des données liées aux préférences personnelles et au comportement du même utilisateur à partir de la base multiélément (200 ; 600) et du jouet satellite (400) pour implémenter une personnalisation à travers les bases multiéléments (200 ; 600) et le jouet satellite (400).
